# EUROPEAN PATENT APPLICATION

(11) **EP 0 639 650 A1**
(43) Date of publication of application: **22.02.1995**
(21) Application number: 94305512.9
(22) Date of filing: 26.07.1994
(51) Int. Cl.: C21C 7/00, B22D 11/10, C21C 5/52

(54) **CO2 snow discharge apparatus**

(30) Priority: 18.08.1993 AU PM0679/93
(71) Applicant: THE COMMONWEALTH INDUSTRIAL GASES LIMITED, Chatswood, NSW 2067 (AU)
(72) Inventor: Karbanowicz, Michael, West Pennant Hills, New South Wales 2125 (AU); Bishop, Michael, Castle Hill, New South Wales 2154 (AU)
(74) Representative: Wickham, Michael

(57) **Abstract**

A carbon dioxide snow discharge apparatus (2) comprising two snow discharge tubes (4, 6) adapted to be selectively operated either singly or in combination. Snow discharge tubes (4, 6) are joined at selected points (20, 22, 24, 26) along their length.

## Description

The present invention relates to a carbon dioxide snow apparatus.

When molten metal contacts atmospheric air, oxides and nitrides are formed which create fumes and can reduce the metallurgical purity of the metal. In the past a number of shielding techniques have been used. For example, covering powders have been spread on the surface of the liquid metal to isolate the metal from the atmosphere. This technique is clearly ineffective when pouring molten metal in which case the problems of oxidation and fume generation are not prevented.

More recently, carbon dioxide snow has been used for this application. The use of carbon dioxide has beneficial effects over other types of industrial gases. In practice, liquid carbon dioxide is expanded through a nozzle to atmospheric pressure to produce carbon dioxide snow. This snow is then injected to the desired location.

It has been found that if the velocity of the snow is too low, little or no snow reaches the surface of the liquid metal or other desired location. It has also been found that if the velocity of the snow is too high, air is entrained with the snow and this is undesirable as it results in ineffective shielding and furthermore thermal exchange occurs between the hot air and the snow which results in untimely sublimation of the snow. Furthermore, if the velocity of the snow upon exiting the tube is too high you get very poor snow production. This is because snow initially forms as small pin point flakes. At very high velocities it will remain as pin point flakes and will tend to sublimate before effective shielding occurs. At lower velocities the pin point flakes merge to give snow flakes of sufficient size to resist untimely sublimination.

As a result of the criticality of injection velocity, the snow discharge pipe is dimensioned so that the outlet velocity of the particles of snow is such that the jet has the required kinetic energy for projecting or spraying the carbon dioxide snow to the desired location whilst avoiding air aspiration which would result in an untimely sublimation of a part of the snow and hence have an adverse effect on shielding efficiency.

The prior art snow discharge pipe has an optimum flow rate which corresponds to the optimum velocity. This means that a given snow discharge tube has limited flexibility for different applications which require different flow rates.

It is an object of the invention to provide a more flexible snow discharge apparatus.

According to the invention there is provided a carbon dioxide snow discharge apparatus comprising at least two snow discharge tubes adapted to be selectively operated either singly or in combination, each snow discharge tube being adapted to receive liquid carbon dioxide and including expansion means to expand the liquid carbon dioxide to form carbon dioxide snow.

Preferably, there are two snow discharge tubes of different internal diameters. In this embodiment, the smaller diameter snow discharge tube can be operated singly where a low flow rate of carbon dioxide snow is desired, the large diameter snow discharge pipe can be operated singly where a moderate flow rate is desired, and both snow discharge tubes can be operated in combination when a high flow rate is desired.

Preferably, the snow discharge tubes are juxtaposed and joined by conventional means at selected points along their length. This construction has been found to be advantageously rigid and stable and allows pipes to be unsupported over greater lengths. This is particularly advantageous where the location to which the snow is to be delivered is relatively inaccessible.

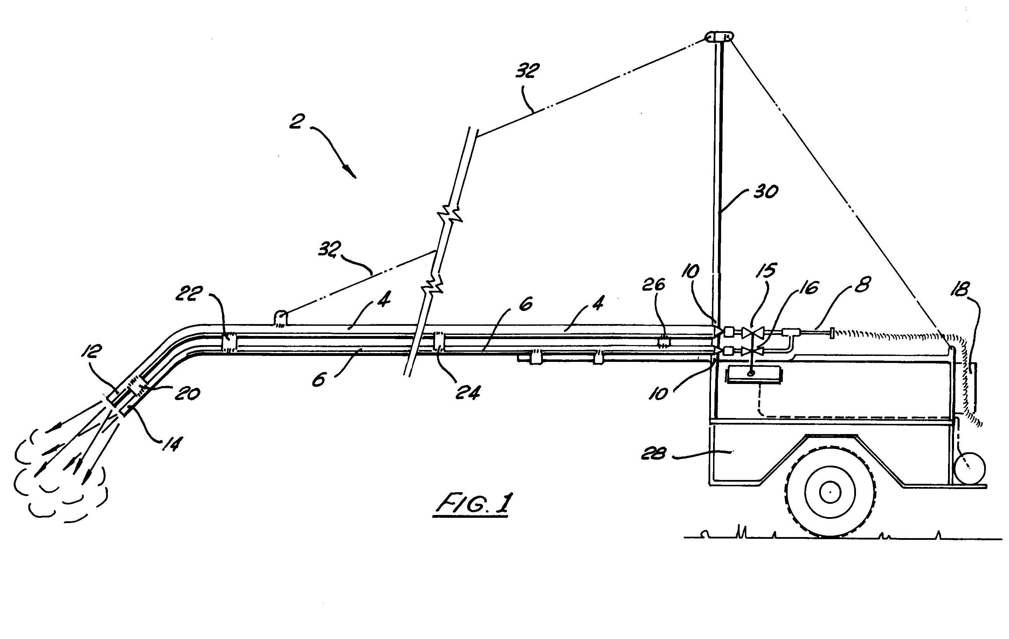

A preferred embodiment of the invention will now be described, by way of example only, with reference to the accompanying drawing which is a side elevation of a carbon dioxide snow discharge apparatus according to the invention.

Referring to the drawing, there is illustrated a carbon dioxide snow discharge apparatus 2 comprising two snow discharge tubes 4 and 6 adapted to be selectively operated either singly or in combination.

Each snow discharge tube 4, 6 is adapted to receive liquid carbon dioxide from a reservoir (not shown) via conduit 8. The discharge tubes 4 and 6 also each include an expansion nozzle 10 through which liquid carbon dioxide is expanded to atmospheric pressure to form carbon dioxide snow. It has been found experimentally that the optimum orifice tube internal diameter ratio is 1:12.5 for liquid supply pressures of 1200-1500 kPa. The preferred ratio range is from 1:9 to 1:5. The carbon dioxide snow is then discharged from the respective distal ends 12, 14 of snow discharge tubes 4, 6.

Valves 15, 16 are provided intermediate the conduit 8 and discharge tubes 4 and 6 which are conventionally actuated via a control cabinet 18. For example, valves 14, 15 may be actuated electrically or pneumatically.

The snow discharge tubes 4 and 6 are juxtaposed and joined by conventional means at selected points 20, 22, 24 and 26 along their length. The joins are provided by welded brackets but other conventional joining means are equally applicable. This construction has been surprisingly found to be advantageously rigid and stable and allows pipes to be unsupported over greater lengths.

In the illustrated embodiment, the snow discharge tubes 4 and 6 are mounted on trailer 28 and are additionally supported by a post 30 and stay system 32.

Although the invention has been described with reference to a specific example, it will be appreciated by those skilled in the art that the invention may be embodied in many other forms.

## Claims

1. A carbon dioxide snow discharge apparatus characterised by at least two snow discharge tubes (4, 6) adapted to be selectively operated either singly or in combination, each snow discharge tube (4, 6) being adapted to receive liquid carbon dioxide and including expansion means (10) to expand the liquid carbon dioxide to form carbon dioxide snow.

2. A carbon dioxide snow discharge apparatus as claimed in Claim 1, characterised in that there are two snow discharge tubes (4, 6) of different diameters.

3. A carbon dioxide snow discharge apparatus as claimed in Claim 1 or Claim 2, characterised in that the snow discharge tubes (4, 6) are juxtaposed and joined at selected points (20, 22, 24) along their length.

4. A carbon dioxide snow discharge apparatus as claimed in Claim 3, characterised in that the snow discharge tubes (4, 6) are joined by welded brackets.

5. A carbon dioxide snow discharge apparatus as claimed in any one of the preceding claims, characterised in that each expansion means (10) includes an orifice and the orifice to discharge tube diameter ratio is in the range from 1:9 to 1:15.

6. A carbon dioxide snow discharge apparatus as claimed in any one of the preceding claims characterised by control means to automatically selectively operate one or both of said discharge tubes (4, 6).
